# EUROPÄISCHE PATENTSCHRIFT

(11) **EP 2 617 086 B1**
(45) Veröffentlichungstag und Bekanntmachung des Hinweises auf die Patenterteilung: **15.08.2018**
(21) Anmeldenummer: 12728955.1
(22) Anmeldetag: 24.05.2012
(51) Int. Cl.: H01M 2/38

(54) **BATTERIE, BATTERIEKASTEN UND VERFAHREN ZUR HERSTELLUNG EINER BATTERIE**
BATTERY, BATTERY BOX, AND METHOD FOR PRODUCING A BATTERY
BATTERIE, BOÎTIER DE BATTERIE ET PROCÉDÉ DE FABRICATION D'UNE BATTERIE

(30) Priorität: 31.08.2011 DE 102011111516
(43) Veröffentlichungstag der Anmeldung: 24.07.2013
(73) Patentinhaber: Akkumulatorenfabrik Moll GmbH & Co. KG, 96231 Bad Staffelstein (DE)
(72) Erfinder: GELBKE, Manfred, 96231 Bad Staffelstein (DE); LANG, Peter, 96215 Lichtenfels (DE); LANG, Stefan, 96250 Ebensfeld (DE)
(74) Vertreter: Patent- und Rechtsanwälte Ullrich & Naumann
(86) Internationale Anmeldenummer: PCT/DE2012/200040
(87) Internationale Veröffentlichungsnummer: WO 2013/029608

(56) Entgegenhaltungen:
- DE-A1- 19 823 916
- DE-A1-102010 048 428
- US-A- 5 096 787

## Beschreibung

Die Erfindung betrifft eine Batterie, insbesondere für Kraftfahrzeuge, umfassend einen in Zellen unterteilten Batteriekasten, in den Zellen angeordnete Elektrodenplatten, eine Elektrolyt-Flüssigkeit, die die Elektrodenplatten umgibt, und eine Einrichtung zum Durchmischen der Elektrolyt-Flüssigkeit in den Zellen, wobei die Einrichtung eine Trennwand umfasst, die einen von den Elektrodenplatten getrennten, einen oberen Bereich mit einem unteren Bereich der Zelle strömungsverbindenden Strömungspfad bildet. Des Weiteren betrifft die Erfindung einen Batteriekasten für eine erfindungsgemäße Batterie sowie ein Verfahren zur Herstellung einer solchen Batterie.

Bei Batterien mit flüssigem Elektrolyten entstehen während des Betriebs Gradienten in der Säuredichte. Beim Entladen der Batterie wird Säure verbraucht. So entsteht bei einer Bleisäurebatterie unter Abgabe von elektrischer Energie aus dem Blei der Elektroden und der Schwefelsäure des Elektrolyten Bleisulfat und Wasser. Dadurch sinkt in unmittelbarer Nähe der Elektroden die Säuredichte. Beim Ladevorgang wird dieser Vorgang umgekehrt, d.h. unter Einsatz elektrischer Energie wird Säure "erzeugt". Dadurch steigt die Säuredichte in unmittelbarer Nähe der Elektroden an. In beiden Fällen gleichen Diffusionsprozesse die unterschiedlichen Säuredichten in gewissen Grenzen aus. Es bleiben jedoch Gradienten bestehen.

Problematisch erweist sich weiter, dass sich zusätzlich zu dem Gradienten in Elektrodenquerrichtung ein Gradient längs der Elektroden ausbildet. Die im Vergleich zu Wasser schwerere Schwefelsäure sinkt unter Einfluss der Gravitation nach unten in Richtung Batterieboden. Dadurch nimmt die Konzentration im unteren Bereich der Batterie zu, was zu einer sogenannten Säureschichtung führt. Eine starke Ausprägung von Säureschichtung kann eine irreversible Schädigung der Elektroden zur Folge haben.

Aus der Praxis sind bereits verschiedene Verfahren bekannt, mit denen Säureschichtung vermieden oder entstandene Säureschichtung abgebaut werden kann. Es sind Verfahren bekannt, die eine thermische Umwälzung nutzen. Hier sorgt eine Wärmequelle für eine Konvektionsbewegung innerhalb der Batterie. Derartige Verfahren sind beispielsweise aus der WO 2008/019674 A2 oder der DE 10 2007 021 841 A1 bekannt. Andere Verfahren nutzen kurzzeitige Überhöhungen der Ladespannung, durch die es zu Gasungen kommt. Die dadurch entstehenden Gasblasen durchwirbeln den Elektrolyten, was zum Abbau von Säureschichtung beiträgt. Andere Verfahren nutzen Pumpen, mit denen eine Umwälzung des Elektrolyten bewirkt wird. Dabei sind verschiedenste Pumpmechanismen im Zusammenhang mit einer Elektrolytumwälzung im Einsatz. So nutzt beispielsweise die DE 29 12 527 A1 eine sogenannte Mammutpumpe. Daneben sind andere Pumpmechanismen, beispielsweise aus der DE 35 26 939 A1, bekannt.

Problematisch bei den bekannten Verfahren und Vorrichtungen ist, dass die Maßnahmen zur Umwälzung des Elektrolyten meist ineffizient sind. Außerdem muss ein relativ hoher Energieaufwand betrieben werden, um Säureschichtungen gut und zügig abbauen zu können. Dies geht meist auf Kosten eines Elektrolytverbrauchs (bei Durchmischung mittels Gasung), des Einbringens zusätzlicher Wärme (bei Konvektionsdurchmischung) oder aufwändiger Maßnahmen zur Handhabung der Batterie (bei Pumpen durch Verkippen des Batterie).

Aus der DE 10 2009 024 271 A1 ist eine gattungsbildende Batterie bekannt, bei der bereits eine Trennwand zur Definition eines Strömungspfads für die Elektrolyt-Flüssigkeit vorgesehen ist, um nämlich der ungewünschten Säureschichtung durch Umwälzung entgegenzuwirken. Die dort vorgesehene Trennwand definiert zwar einen beim Beschleunigen/Abbremsen bzw. bei Kurvenfahrten des Kraftfahrzeugs wirksamen Strömungspfad auf Grund innerhalb des Gehäuses auftretender Schwappbewegungen der Elektrolyt-Flüssigkeit, jedoch ist die damit erreichte Durchmischung des Elektrolyten unzureichend. Letztendlich ist der dort auftretende Pumpeffekt in Bezug auf die baulich generierte hydrostatische Pumpe nicht ausreichend, um die Säureschichtung zufriedenstellen abbauen zu können.

Der vorliegenden Erfindung liegt daher die Aufgabe zu Grunde, eine Batterie der gattungsbildenden Art derart auszugestalten und weiterzubilden, dass unter Nutzung eines hydrostatischen Pumpeffekts einer ungewollten Säureschichtung wirksam entgegengewirkt wird, und zwar bei geringstmöglichem konstruktivem Aufwand. Ein entsprechender Batteriekasten zur Herstellung einer erfindungsgemäßen Batterie ist anzugeben. Ebenso soll ein Verfahren angegeben werden, welches sich zur Herstellung einer erfindungsgemäß gestalteten Batterie besonders eignet.

Voranstehende Aufgabe ist in Bezug auf die erfindungsgemäße Batterie durch die Merkmale des Patentanspruchs 1 gelöst. Danach ist die eingangs erörterte Batterie dadurch gekennzeichnet, dass die Trennwand im oberen Bereich eine sich vorzugsweise über die gesamte Breite der Trennwand erstreckende Klappe aufweist, die gemeinsam mit angrenzenden Innenwandungen des Batteriekastens einen Teil des Strömungspfads definiert.

Erfindungsgemäß ist erkannt worden, dass der ungewollten Säureschichtung alleine durch konstruktive Maßnahmen entgegengewirkt werden kann, nämlich durch konstruktive Verbesserung im Innern des Batteriekastens, zur Erzeugung eines hinreichend guten hydrostatischen Pumpeffekts. Wie im Stand der Technik wird die beim Beschleunigen/Abbremsen bzw. bei Kurvenfahrten auftretende Schwappbewegung der Elektrolyt-Flüssigkeit genutzt, um nämlich Batteriesäure von oben in den unteren Teil der jeweiligen Zellen zu fördern, wodurch einer Säureschichtung wirksam entgegengewirkt wird. Im Konkreten ist dazu die Trennwand im oberen Bereich modifiziert, nämlich dadurch, dass der Trennwand im oberen Bereich, d.h. oberhalb des Füllstandes der Elektrolyt-Flüssigkeit, eine Klappe zugeordnet ist, die gemeinsam mit angrenzenden Innenwandungen des Batteriekastens einen Teil der Strömungspfads definiert.

Bei der Klappe handelt es sich letztendlich um eine Verlängerung der Trennwand bzw. um einen integrierten Bestandteil der Trennwand, die beispielsweise über ein Filmscharnier mit der Trennwand verbunden ist. Im Betriebszustand ist die Klappe zu den Elektrodenplatten hin geneigt, so dass bei auftretender Schwappbewegung die Elektrolyt-Flüssigkeit zunächst gegen die durch die Klappe gebildete Prallwand schwappt und von dort aus über die Klappe hinweg in einen durch die Klappe gebildeten Trichter gelangt. Der Trichter biete für den sich anschließenden Strömungspfad eine Art Auffangbereich mit vergrößertem Volumen. Von dem Trichter aus verteilt sich die Elektrolyt-Flüssigkeit in den Bereich zwischen Trennwand und Innenwandung des Batteriekastens und gelangt von dort über den so gebildeten Strömungspfad in den unteren Bereich, genauer gesagt unter die Elektrodenplatten, wodurch eine wirksame Vermischung der Elektrolyt-Flüssigkeit stattfindet.

An dieser Stelle sei angemerkt, dass der durch die zu den Elektrodenplatten hin geneigte Klappe gebildete Trichter eine erhebliche Menge an Elektrolyt-Flüssigkeit aufnehmen kann, so dass von dort aus, u.a. gewichtsbedingt, eine erhebliche Strömung nach unten stattfindet, was wiederum eine wirksame Durchmischung der Elektrolyt-Flüssigkeit im unteren Bereich der jeweiligen Zelle zur Folge hat. Einer nachteiligen Säureschichtung wird somit wirksam entgegengewirkt.

Im Gegensatz zum Stand der Technik ist hier eine für den Pumpeffekt vorteilhafte Geometrie geschaffen, nämlich durch die im oberen Bereich eine Klappe aufweisende Trennwand, die beim Auftreten von Schwappbewegungen der Elektrolyt-Flüssigkeit hinreichend viel Flüssigkeit aufnehmen und nach unten fördern kann.

Der in erfindungsgemäßer Weise realisierte Pumpeffekt kann dadurch weiter begünstigt werden, dass die Trennwand im unteren Bereich, nahe dem Boden oder unmittelbar am Boden, Durchgänge bzw. Durchbrüche als Säureaustritt aufweist. Diese Maßnahme wirkt funktional zusammen mit der im oberen Bereich der Trennwand ausgebildeten Klappe und der Trennung des Klappenbereichs von der Seitenwand des Batteriekastens, so dass die Klappe, beispielsweise über ein Filmscharnier an die Trennwand angelenkt, mehr oder weniger frei beweglich, nämlich zu den Elektrodenplatten hin kippbar bzw. klappbar ausgebildet ist. Durch Kombination der zuvor genannten konstruktiven Maßnahmen bildet die Trennwand mit der Klappe und den Seitenwänden sowie der Kastenaußenwand einen von den Elektrodenplatten separierten Strömungspfad bzw. Strömungskanal, durch den die Säure förderbar ist, nämlich beim Auftreten der insoweit günstigen Schwappbewegung innerhalb des Batteriekastens.

Bei der Trennwand kann es sich um ein separates Bauteil handeln, welches bei der Konfektionierung der Batterie bzw. des Batteriekastens in den Batteriekasten eingesteckt und gegebenenfalls eingeklebt wird.

Insbesondere im Rahmen einer einfachen Fertigung ist es von ganz besonderem Vorteil, wenn die Trennwand integraler Bestandteil des Batteriekastens ist, beispielsweise in den Batteriekasten eingespritzt ist. Dies gilt gleichermaßen für die Klappe, die integraler Bestandteil der Trennwand sein kann, nämlich über ein Filmscharnier mit der Trennwand verbunden ist.

In Bezug auf die Montage der erfindungsgemäßen Batterie ist es von besonderem Vorteil, wenn an den inneren Seitenwandungen des Batteriekastens erste Haltenasen, Verrastungen oder dgl. ausgebildet sind, die die Klappe in einer senkrechten Einbauposition, vorzugsweise in einer Ebene mit der Trennwand, halten. In einer solchen senkrechten bzw. lotrechten Position ist die Klappenstellung, beispielsweise durch angespritzte Haltenasen gesichert. Wie bei einer klassischen Batterie können dabei die Batteriesätze bzw. die Elektrodenplatten in den Kasten gesetzt werden, ohne dass die im Betrieb zu den Elektrodenplatten hin gekippte Klappe stört.

Des Weiteren ist es von Vorteil, wenn an der inneren Seitenwandung des Batteriekastens zwei weitere - zweite - Haltenasen, Verrastungen oder dgl. ausgebildet sind, die die Klappe in einer schräggestellten Arbeitsposition, aus der Ebene der Trennwand zu den Elektroden hin geneigt bzw. geschwenkt, halten. Diese Arbeitsposition kann manuell oder aber auch automatisch nach der Montage realisiert werden, so dass sich die Klappe in der schräg liegenden Endposition befindet. In dieser Position kann die Klappe verrastet sein, so dass ein für das "Schöpfen" bei den Schwappbewegungen der Elektrolyt-Flüssigkeit erforderliche Trichter wirksam gebildet ist, wodurch eine hervorragend arbeitende hydrostatische Pumpe realisiert ist.

Um die Elektrolyt-Zirkulation am Boden, d.h. im Bodenbereich des Batteriekastens, zu begünstigen, ist es von weiterem Vorteil, wenn die Elektrodenplatten vorzugsweise mittels rippenartiger Abstandhalter vom Boden des Batteriekastens beabstandet sind, so dass eine Strömung unter die Elektrodenplatten leitbar ist. Im Konkreten können die Abstandhalter als rippenartige Prismen ausgebildet sein, so dass die von oben hinter die Trennwand geförderte Säure unter die Elektrodenplatten strömen kann, wodurch eine Vermischung der Elektrolyt-Flüssigkeit abermals begünstigt ist.

Die hier zu Grunde liegende Aufgabe ist in Bezug auf einen erfindungsgemäßen Batteriekasten durch die Merkmale des nebengeordneten Patentanspruchs 9 gelöst, nämlich durch einen Batteriekasten zur Herstellung bzw. Konfektionierung einer Batterie mit den Merkmalen der die Batterie betreffenden Patentansprüche entsprechend den voranstehenden Ausführungen.

In Bezug auf das erfindungsgemäße Verfahren zur Herstellung einer Batterie löst der nebengeordnete Patentanspruch 10 die zu Grunde liegende Aufgabe, nämlich dadurch, dass vor dem Einbau der Elektrodenplatte die Klappe in einer Montageposition, vorzugsweise in der Ebene der Trennwand, fixiert wird, und dass die Klappe nach dem Einbau in eine aus der Ebene der Trennwand zu den Elektrodenplatten hin gekippte Arbeitsposition - manuell oder automatisch - verbracht wird. In Bezug auf die durch das Verfahren hergestellte Batterie sei auf die die Batterie betreffenden Ausführungen und die dortigen Merkmale verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht, im Querschnitt, ein Ausführungsbeispiel einer erfindungsgemäßen Batterie mit beweglicher integraler Klappe, woraus sich das Wirkprinzip der Elektrolytumwälzung mit integrierter hydrostatischer Pumpe ergibt,
- Fig. 2: in einer schematischen Seitenansicht, im Querschnitt, den Batteriekasten gemäß Fig. 1, ohne Elektrodenplatten, wobei sich die Klappe in der lotrechten Montageposition befindet und dort arretiert ist,
- Fig. 3: in einer schematischen Seitenansicht, im Querschnitt, den Batteriekasten gemäß Fig. 1, ohne Elektrodenplatten, wobei sich die Klappe in der geneigten Arbeitsposition befindet und dort arretiert ist,
- Fig. 4: in einer schematischen Seitenansicht, geschnitten, das Ausführungsbeispiel aus Fig. 1 im Detail, und
- Fig. 5: in einer schematischen Ansicht, quer zu der Darstellung aus Fig. 4, geschnitten und im Detail, den Batteriekasten, bei dem rippenartigen Abstandhalter zum Abstützen der Elektrodenplatten erkennbar sind.

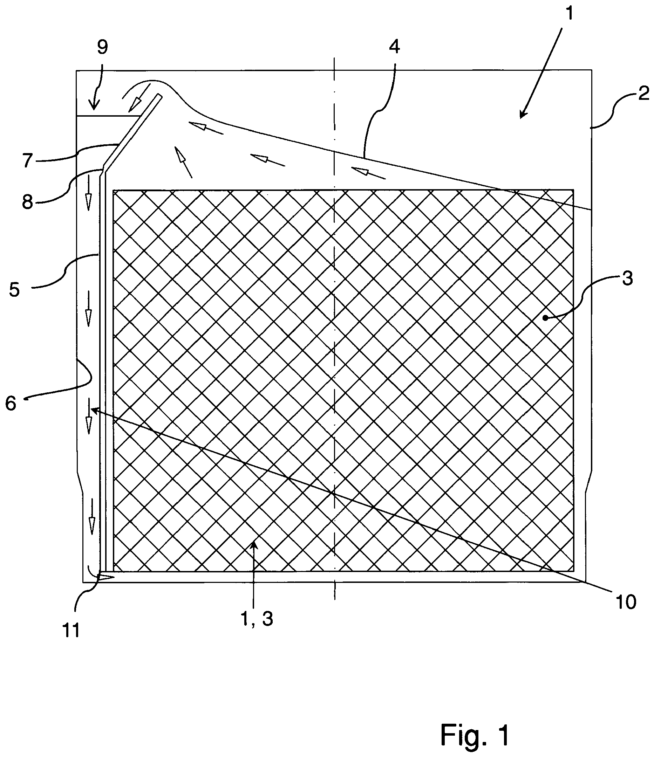

Fig. 1 zeigt in einer geschnittenen Seitenansicht, schematisch, den grundsätzlichen Aufbau einer erfindungsgemäßen Batterie, der das Wirkprinzip der Elektrolyt-Umwälzung mit einer im Batteriekasten integrierten hydrostatischen Pumpe erkennen lässt.

Genauer gesagt umfasst die Batterie einen in Zellen 1 unterteilten Batteriekasten 2, wobei in den Zellen 1 Elektrodenplatten 3 angeordnet sind. Die Elektrodenplatten 3 sind - im Betriebszustand der Batterie - von einer Elektrolyt-Flüssigkeit 4, genauer gesagt von einer Säure, umgeben.

Fig. 1 lässt des Weiteren erkennen, dass eine Einrichtung zum Durchmischen der Elektrolyt-Flüssigkeit 4 vorgesehen ist, wobei diese Einrichtung eine Trennwand 5 zur Bildung eines Strömungspfads zwischen der Trennwand 5 und der Innenwandung 6 des Batteriekastens 2 umfasst.

Erfindungsgemäß ist die Trennwand 5 im oberen Bereich mit einer sich über die gesamte Breite der Trennwand 5 erstreckenden Klappe 7 ausgestattet, die über ein Filmscharnier 8 fest mit der Trennwand 5 verbunden ist. Letztendlich handelt es sich bei der Klappe 7 um einen integralen Bestandteil der Trennwand 5.

Bei der in Fig. 1 gezeigten Position der Klappe 7 wird deutlich, dass die Klappe 7 gegenüber der Innenwand 6 des Batteriekastens 2 eine Art Trichter 9 bildet, der sich ganz besonders zur Aufnahme schwappender Elektrolyt-Flüssigkeit 4 eignet, wie dies in Fig. 1 angedeutet ist. So gelangt über den Trichter 9 hinreichend viel Flüssigkeit über einen separaten Strömungspfad 10 in einen Bereich nach unten, wobei in der Trennwand 5 Durchgänge 11 ausgebildet sind, durch die die hydrostatisch geförderte Elektrolyt-Flüssigkeit 4 in einen unteren Bereich des Batteriekastens 2 bzw. der Elektrodenplatten 3 gelangt.

Bei der in Fig. 1 gezeigten Trennwand 5 handelt es sich um ein eingespritztes Bauteil, welches aus dem gleichen Material wie der Batteriekasten 2 besteht.

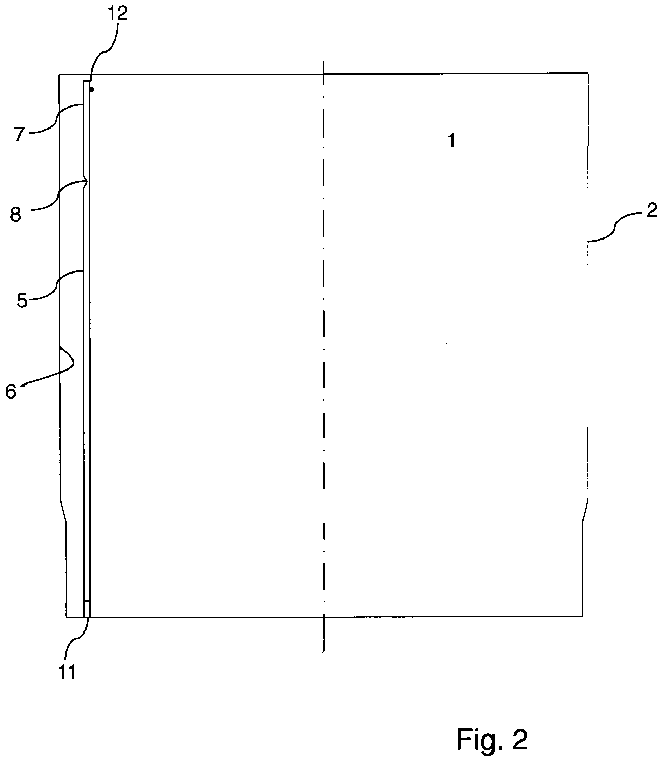

Fig. 2 zeigt in einer schematischen Ansicht den Batteriekasten 2 mit dort integrierter Trennwand 5, wobei die Klappe 7 in einer vertikalen bzw. aufrechten Einbauposition arretiert ist. Dazu sind in die Innenwandung 6 des Batteriekastens 2 Haltenasen 12 integriert, die hier lediglich angedeutet sind. In dieser Position lassen sich problemlos die in Fig. 2 nicht gezeigten Elektrodenplatten 3 einbauen.

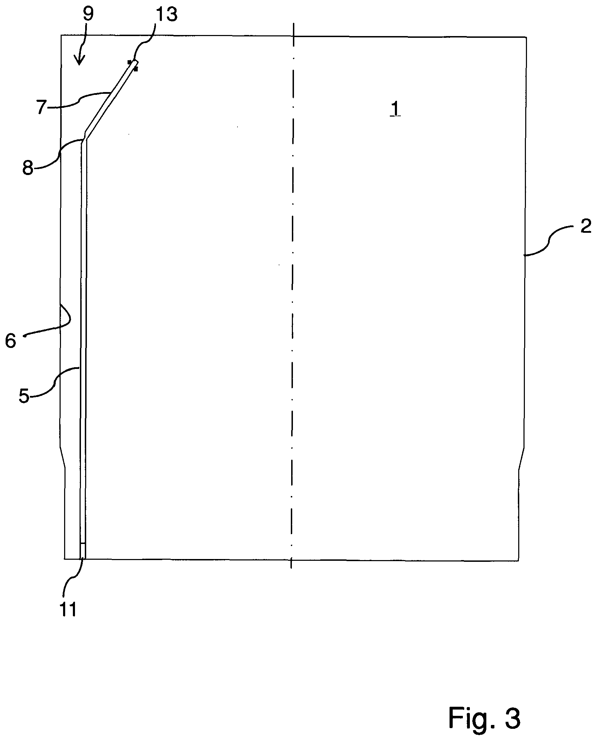

Fig. 3 zeigt ebenfalls in schematischer Ansicht den Batteriekasten 2 mit integrierter Trennwand 5, wobei dort die Klappe 7 in die Arbeitsposition geschwenkt bzw. schräggestellt ist. In dieser Position ist bereits der in erfindungsgemäßer Weise vorgesehene Trichter 9 gebildet. Auch in dieser Position lässt sich die Klappe 7 arretieren, nämlich abermals durch an der Innenwandung 6 vorgesehene Haltenasen 13. Die in Fig. 3 gezeigte Arbeitsposition entspricht dem üblichen Betriebszustand der erfindungsgemäßen Batterie, wobei eine Änderung der Winkelstellung der Klappe 7 nicht bzw. nicht mehr erforderlich ist.

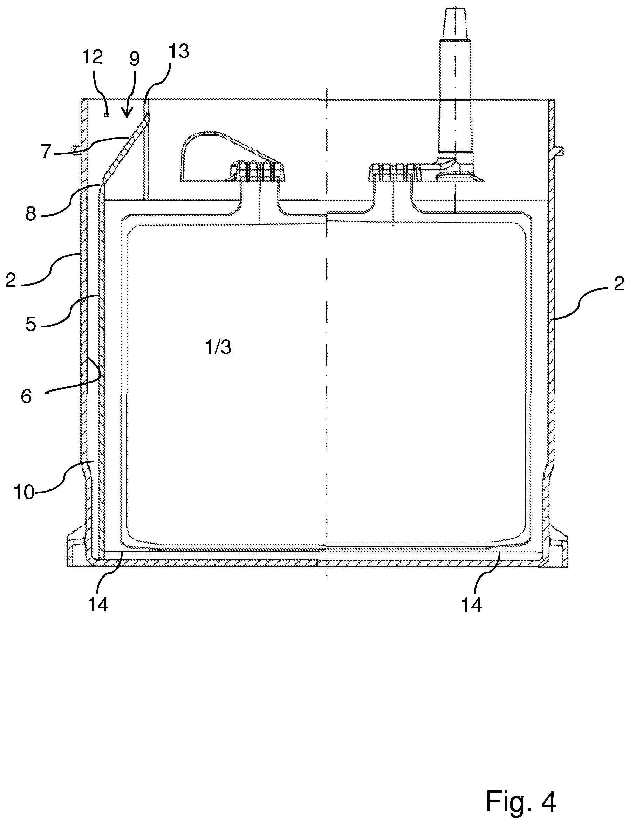

Fig. 4 zeigt in einer schematischen Ansicht, gegenüber Fig. 1 etwas detaillierter, die erfindungsgemäße Batterie mit Batteriekasten 2 und angedeuteten Elektrodenplatten 3.

Die Trennwand 5 ist integraler Bestandteil des Batteriekastens 2, wobei die Klappe 7 über ein Filmscharnier 8 fest mit der Trennwand 5 verbunden ist.

Bei der in Fig. 4 gewählten Darstellung befindet sich die Klappe 7 in der gekippten Arbeitsposition und ist dort arretiert.

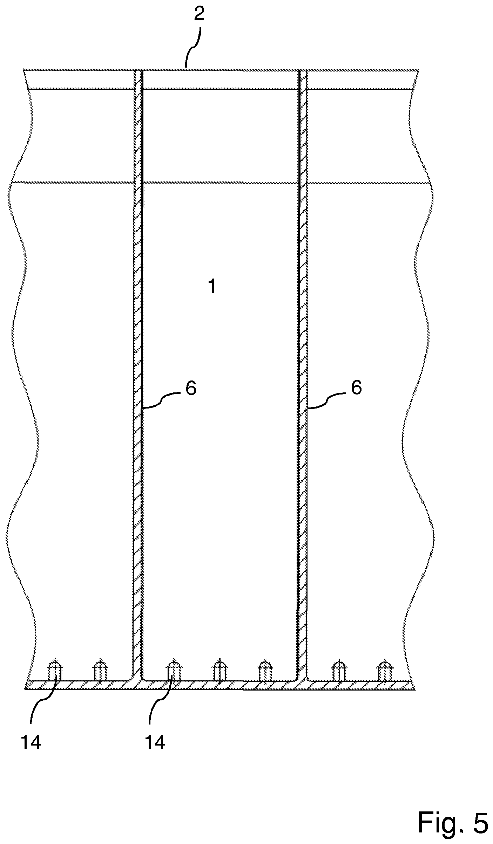

Gemäß der Darstellung in Fig. 4 ist durch die Klappe 7 der Trichter 9 gebildet, von dem aus schwappende Elektrolyt-Flüssigkeit über den Strömungspfad 10 nach unten gelangt und von dort aus durch in Fig. 4 nicht gezeigte Durchgänge 11 in einen Bereich unter die Elektrodenplatten 3 gelangen kann. Eine solche Strömung der Elektrolyt-Flüssigkeit 4 ist gemäß der Darstellung in Fig. 5 dadurch begünstigt, dass die Elektrodenplatten 3 mittels rippenartiger Abstandhalter 14 zum Bodenbereich des Batteriekastens 2 beabstandet sind, so dass die Elektrodenplatten 3 je Zelle 1 unterströmbar sind. Die Abstandhalter 14 sind vorzugsweise als rippenartige Prismen ausgebildet, auf denen die Elektrodenplatten 3 mit Abstand zum Boden des Batteriekastens 2 positionierbar sind und im Betrieb der Batterie fest sitzen.

In Bezug auf Merkmale, die den Figuren nicht entnehmbar sind, sei zur Vermeidung von Wiederholungen auf den allgemeinen Teil der Beschreibung verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dient, diese jedoch nicht auf das Ausführungsbeispiel einschränkt.

### Bezugszeichenliste

- 1: Zelle
- 2: Batteriekasten
- 3: Elektrodenplatte
- 4: Elektrolyt-Flüssigkeit
- 5: Trennwand
- 6: Innenwandung (des Batteriekastens)
- 7: Klappe (der Trennwand)
- 8: Filmscharnier (der Klappe)
- 9: Trichter (gebildet durch die Klappe)
- 10: Strömungspfad (hinter der Trennwand)
- 11: Durchgang (in der Trennwand unten)
- 12: Haltenasen (vertikale Position der Klappe)
- 13: Haltenasen (schräg gestellte Position der Klappe)
- 14: Abstandhalter (zur Beabstandung der Elektrodenplaten vom Boden des Batteriekastens)

## Patentansprüche

1. Batterie, insbesondere für Kraftfahrzeuge, umfassend einen in Zellen (1) unterteilten Batteriekasten (2), in den Zellen (1) angeordnete Elektrodenplatten (3), eine Elektrolyt-Flüssigkeit (4), die die Elektrodenplatten (3) umgibt, und eine Einrichtung zum Durchmischen der Elektrolyt-Flüssigkeit (4) in den Zellen (1), wobei die Einrichtung eine Trennwand (5) umfasst, die einen von den Elektrodenplatten (3) getrennten, einen oberen Bereich mit einem unteren Bereich der Zelle (1) strömungsverbindenden Strömungspfad (10) bildet, wobei die Trennwand (5) im oberen Bereich eine sich vorzugsweise über die gesamte Breite der Trennwand (5) erstreckende Klappe (7) aufweist, die gemeinsam mit angrenzenden Innenwandungen (6) des Batteriekastens (2) einen Teil des Strömungspfads (10) definiert und wobei die Klappe (7) über ein Filmscharnier (8) mit der Trennwand (5) verbunden ist,
**dadurch gekennzeichnet, dass** die Klappe (7) gegenüber den Innenwandungen (6) des Batteriekastens (2) eine Art Trichter (9) zur Aufnahme schwappender Elektrolyt-Flüssigkeit (4) bildet.

2. Batterie nach Anspruch, **dadurch gekennzeichnet, dass** die Trennwand (5) im unteren Bereich, nahe dem Boden oder unmittelbar am Boden, Durchgänge (11) aufweist.

3. Batterie nach Anspruch 1 oder 2, **dadurch gekennzeichnet, dass** die Trennwand (5) in den Batteriekasten (2) eingesteckt und ggf. eingeklebt ist.

4. Batterie nach Anspruch 1 oder 2, **dadurch gekennzeichnet, dass** die Trennwand (5) in den Batteriekasten (2) eingespritzt ist.

5. Batterie nach einem der Ansprüche 1 bis 4, **dadurch gekennzeichnet, dass** an den inneren Seitenwandungen (6) des Batteriekastens (2) erste Haltenasen (12), Verrastungen oder dgl. ausgebildet sind, die die Klappe (7) in einer senkrechten Einbauposition, vorzugsweise in einer Ebene mit der Trennwand (5), halten.

6. Batterie nach einem der Ansprüche 1 bis 5, **dadurch gekennzeichnet, dass** an den inneren Seitenwandungen (6) des Batteriekastens (2) zweite Haltenasen (13), Verrastungen oder dgl. ausgebildet sind, die die Klappe in einer schräg gestellten Arbeitsposition, aus der Ebene der Trennwand (5) zu den Elektroden (3) hin geneigt, halten.

7. Batterie nach einem der Ansprüche 1 bis 6, **dadurch gekennzeichnet, dass** die Elektrodenplatten (3) vorzugsweise mittels rippenartiger Abstandhalter (14) vom Boden des Batteriekastens (2) beabstandet sind.

8. Batterie nach Anspruch 7, **dadurch gekennzeichnet, dass** die Abstandhalter (14) als rippenartige Prismen ausgebildet sind.

9. Batteriekasten zur Herstellung einer Batterie mit den Merkmalen nach einem der Ansprüche 1 bis 8.

10. Verfahren zur Herstellung einer Batterie nach einem der Ansprüche 1 bis 8,
**dadurch gekennzeichnet, dass** vor dem Einbau der Elektrodenplatten (3) die Klappe (7) in einer Montageposition, vorzugsweise in der Ebene der Trennwand (5), fixiert wird und dass die Klappe (7) nach dem Einbau in eine aus der Ebene der Trennwand (5) zu den Elektrodenplatten (3) hin gekippte Arbeitsposition - manuell oder automatisch - verbracht wird.

## Claims

1. Battery, in particular for motor vehicles, comprising a battery box (2) divided into cells (1), electrode plates (3) arranged in the cells (1), an electrolyte liquid (4) which surrounds the electrode plates (3), and a device for thoroughly mixing the electrolyte liquid (4) in the cells (1), the device comprising a partition (5) which forms a flow path (10) that is isolated from the electrode plates (3) and fluidically connects an upper region to a lower region of the cell (1), the partition (5) comprising in the upper region a flap (7) that preferably extends over the entire width of the partition (5) and defines, together with neighbouring inner walls (6) of the battery box (2), part of the flow path (10), the flap (7) being connected to the partition (5) by means of a film hinge (8),
**characterised in that**, with respect to the inner walls (6) of the battery box (2), the flap (7) forms a type of funnel (9) for receiving sloshing electrolyte liquid (4).

2. Battery according to claim 1, **characterised in that** in the lower region, close to the base or directly on the base, the partition (5) comprises passages (11).

3. Battery according to either claim 1 or claim 2, **characterised in that** the partition (5) is inserted into the battery box (2) and, if necessary, is glued in place.

4. Battery according to either claim 1 or claim 2, **characterised in that** the partition (5) is injection moulded into the battery box (2).

5. Battery according to any one of claims 1 to 4, **characterised in that** first retaining lugs (12), catches or the like are formed on the inner side walls (6) of the battery box (2), which retaining lugs, catches or the like hold the flap (7) in a vertical installation position, preferably in a plane together with the partition (5).

6. Battery according to any one of claims 1 to 5, **characterised in that** second retaining lugs (13), catches or the like are formed on the inner side walls (6) of the battery box (2), which retaining lugs, catches or the like hold the flap in an oblique operational position which is inclined from the plane of the partition (5) towards the electrodes (3).

7. Battery according to any one of claims 1 to 6, **characterised in that** the electrode plates (3) are spaced apart from the base of the battery box (2) preferably by means of rib-like spacers (14).

8. Battery according to claim 7, **characterised in that** the spacers (14) are in the form of rib-like prisms.

9. Battery box for producing a battery having the features according to any one of claims 1 to 8.

10. Method for producing a battery according to any one of claims 1 to 8, **characterised in that**, prior to installation of the electrode plates (3), the flap (7) is fixed in an assembly position, preferably in the plane of the partition (5), and **in that**, after installation, the flap (7) is brought, manually or automatically, into an operational position which is tilted from the plane of the partition (5) towards the electrode plates (3).

## Revendications

1. Batterie, plus particulièrement, pour des véhicules automobiles, comprenant un boîtier de batterie (2) divisé en cellules (1), des plaques d'électrodes (3) disposées dans les cellules (1), un électrolyte liquide (4), qui entoure les plaques d'électrodes (3), et un dispositif de mélange de l'électrolyte liquide (4) dans les cellules (1), le dispositif comprenant une cloison (5) qui forme un trajet d'écoulement (10) séparé des plaques d'électrodes (3) et reliant en écoulement une partie supérieure et une partie inférieure de la cellule (1), la cloison (5) comprenant, dans la partie supérieure, un clapet (7) s'étendant de préférence sur toute la largeur de la cloison (5), qui définit, conjointement avec des parois internes (6) adjacentes du boîtier de batterie (2), une partie du trajet d'écoulement (10) et le clapet (7) étant reliée avec la cloison (5) par l'intermédiaire d'une charnière à film (8),
**caractérisée en ce que** le clapet (7) forme, par rapport aux parois internes (6) du boîtier de batterie (2), une sorte d'entonnoir (9) pour l'absorption du clapotis de l'électrolyte liquide (4).

2. Batterie selon la revendication, **caractérisée en ce que** la cloison (5) comprend, dans la partie inférieure, près du fond ou directement sur le fond, des passages (11).

3. Batterie selon la revendication 1 ou 2, **caractérisée en ce que** la cloison (5) est emboîtée et, le cas échéant, collée dans le boîtier de batterie (2).

4. Batterie selon la revendication 1 ou 2, **caractérisée en ce que** la cloison (5) est injectée dans le boîtier de batterie (2).

5. Batterie selon l'une des revendications 1 à 4, **caractérisée en ce que**, au niveau des parois internes (6) du boîtier de batterie (2), des premiers embouts de maintien (12), des encliquetages ou autres sont réalisés, qui maintiennent le clapet (7) dans une position de montage verticale, de préférence dans un plan avec la cloison (5).

6. Batterie selon l'une des revendications 1 à 5, **caractérisée en ce que**, au niveau des parois internes (6) du boîtier de batterie (2), des deuxièmes embouts de maintien (13), des encliquetages ou autres sont réalisés, qui maintiennent le clapet (7) dans une position de travail oblique, inclinée à partir du plan de la cloison (5) en direction des électrodes (3).

7. Batterie selon l'une des revendications 1 à 6, **caractérisée en ce que** les plaques d'électrodes (3) sont écartées, de préférence au moyen d'entretoises (14) ayant la forme d'ailettes, du fond du boîtier de batterie (2).

8. Batterie selon la revendication 7, **caractérisée en ce que** les entretoises (14) sont conçues comme des prismes en forme d'ailettes.

9. Boîtier de batterie pour la fabrication d'une batterie avec les caractéristiques selon l'une des revendications 1 à 8.

10. Procédé de fabrication d'une batterie selon l'une des revendications 1 à 8, **caractérisé en ce que**, avant le montage des plaques d'électrodes (3), le clapet (7) est fixé dans une position de montage, de préférence dans le plan de la cloison (5) et **en ce que** le clapet (7) est mis, après le montage, de manière manuelle ou automatique, dans une position de travail basculée à partir du plan de la cloison (5) en direction des plaques d'électrodes (3).
